# FASCICULE DE BREVET EUROPEEN

(11) **EP 3 976 936 B1**
(45) Date de publication et mention de la délivrance du brevet: **08.03.2023**
(21) Numéro de dépôt: 20742311.2
(22) Date de dépôt: 29.05.2020
(51) Int. Cl.: F01D 21/04, F01D 25/16, F04D 29/053, F04D 29/057

(54) **ENSEMBLE DE SUPPORT ET DE GUIDAGE D'UN ARBRE D'ENTRAINEMENT DE TURBOMACHINE D'AERONEF**
ANORDNUNG ZUR LAGERUNG UND FÜHRUNG EINER ANTRIEBSWELLE FÜR EIN FLUGZEUGTRIEBWERK
ASSEMBLY FOR SUPPORTING AND GUIDING A DRIVE SHAFT FOR AN AIRCRAFT TURBINE ENGINE

(30) Priorité: 03.06.2019 FR 1905866
(43) Date de publication de la demande: 06.04.2022
(73) Titulaire: SAFRAN AIRCRAFT ENGINES, 75015 Paris (FR)
(72) Inventeur: BESSY, Arnaud, 77550 Moissy-Cramayel (FR); LEEDER, Laurent, 77550 Moissy-Cramayel (FR)
(74) Mandataire: Gevers & Orès
(86) Numéro de dépôt international: PCT/FR2020/050921
(87) Numéro de publication internationale: WO 2020/245528

(56) Documents cités:
- EP-A1- 1 553 324
- FR-A1- 2 841 592
- FR-A1- 2 961 865
- FR-A1- 3 022 312

## Description

### Domaine technique de l'invention

Le domaine de la présente invention est celui des turbomachines d'aéronef, et plus particulièrement celui des moyens mis en œuvre au sein de ces turbomachines pour participer au support et au guidage d'un arbre d'entraînement en rotation.

L'invention concerne, plus particulièrement, le problème d'intégrité des turbomachines lors d'une désolidarisation d'une pièce participant au support et au guidage de l'arbre, pouvant être provoqué par un balourd accidentel excessif, par exemple et non limitativement la rupture d'une aube de rotor.

### Arrière-plan technique

L'état de la technique comprend, notamment, les documents EP-A1-1553324, FR-A1-2961865 et FR-A1-3022312.

Les turbomachines, qu'elles soient mono- ou multi-corps, comportent généralement un ou plusieurs paliers à éléments roulants supportant en rotation un arbre de puissance, notamment entraîné par une turbine libre, par rapport à un élément de support du palier fixe lié à un carter de la turbomachine.

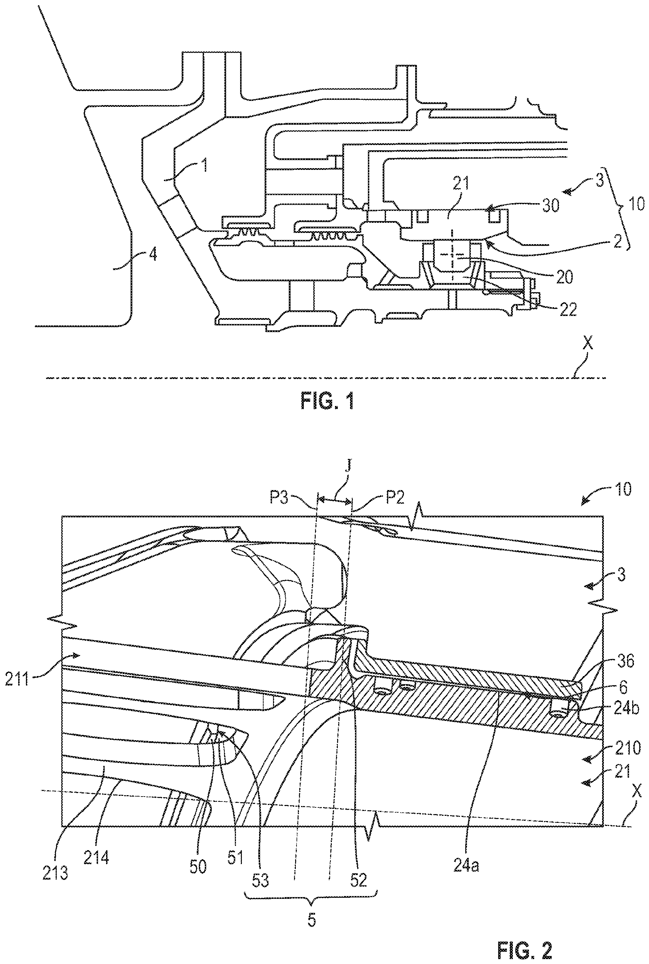

Un tel palier est décrit en liaison avec la figure 1. Sur cette figure, est représentée en coupe axiale et partiellement une ligne d'arbre 1 d'un corps haute-pression d'une turbomachine muni d'un palier 2. Ce corps haute-pression se compose notamment d'un disque de turbine haute-pression 4 sur lequel sont montées des aubes (non représentées) mobiles autour d'un axe longitudinal X de la turbomachine. L'arbre 1 est supporté en rotation par rapport à un support 3 de palier fixe lié au carter (non représenté) de la turbomachine par le palier 2. Ce palier 2 comprend une pluralité d'éléments roulants 20 insérés entre une bague externe 21 disposée du côté du support 3 de palier fixe et une bague interne 22 disposée du côté de l'arbre 1 en rotation. Les bagues externe 21 et interne 22 forment des pistes de roulement pour les éléments roulants 20. Le palier 2 et le support 3 de palier forment un ensemble 10 dit de support et de guidage de l'arbre 1 de la turbomachine. Dans le cas des paliers subissant de lourdes charges, notamment en cas de pertes d'aubes, les bagues externes des paliers comprennent des structures souples, appelées couramment « cages d'écureuils ». Ces bagues externes souples permettent aux paliers d'absorber les couples de torsion inhérents à des cas particuliers de chargement. Cependant, en pratique, la tenue mécanique des paliers n'est pas optimale dans toutes les conditions de fonctionnement de la turbomachine.

Ainsi, pour cette raison, l'ensemble 10 comprend des dispositifs de retenue axiale de la bague externe 21 par rapport au support 3 de palier fixe, notamment afin d'assurer l'arrêt du moteur dans les meilleures conditions lors d'une rupture de cette bague externe, notamment dans les conditions extrêmes d'essais de contrôle type « Blade Off ». « Blade Off » est un terme anglais désignant généralement des essais de sécurité sur les moteurs de turbomachine pour s'assurer que le moteur peut survivre à une rupture d'aube de rotor à l'intérieur du moteur.

Un tel dispositif de retenue est représenté par exemple sur la figure 2. Le dispositif de retenue 5 de cette figure comprend des premières 52 et secondes 53 dents de crabot qui sont disposées, respectivement, sur la bague 21 et le support de palier 3. Ces dents de crabots 52, 53 sont disposées de façon à être décalées angulairement entre elles pour notamment empêcher une éventuelle sortie axiale de la bague 21 désolidarisée par rapport au support de palier 3. Ainsi, ce dispositif 5 permet de retenir axialement une première portion 210 désolidarisée de la bague 21 vis-à-vis du support de palier 3, lorsqu'une seconde portion de la bague 21 est rompue. La première portion 210 de la bague 21 peut être désolidarisée par rapport au support de palier 3, notamment par une rupture en torsion de colonnettes 213 de la seconde portion 211 liant cette première portion 210 au support de palier 3 par l'intermédiaire d'une bride annulaire. Cette première portion 210 désolidarisée est entraînée en rotation par les éléments roulants 20 (ici non représentés) du palier 2, avec notamment un jeu axial J entre les dents de crabot 52, 53.

Cependant, ce jeu axial J n'est pas suffisant pour empêcher la rotation de la portion rompue de la bague 21 dans une bague de frettage 36 du support de palier 3. Plus particulièrement, les dents de crabot 52, 53 comprennent des chanfreins 50, 51, respectivement sur la bague 21 du palier et sur le support 3 du palier, de façon à maintenir en position l'ensemble 10. Ces chanfreins 50, 51 se heurtent pendant une phase de reptation de la bague externe 21 en rotation. Ceci présente comme inconvénient de générer des particules, dû à la collision des chanfreins 50, 51 entre eux, qui se dispersent radialement dans un espace annulaire 6 entre la bague 21 et le support de palier 3. Ce qui peut avoir comme conséquence de dégrader le support de palier et le palier de façon irréversible.

Dans ce contexte, il est intéressant de pallier les inconvénients de l'art antérieur, en proposant un dispositif de retenue fiable d'une bague externe d'un palier désolidarisée de son support de palier, tout en permettant son assemblage simple et rapide dans une turbomachine.

### Résumé de l'invention

L'invention propose ainsi un ensemble de support et de guidage d'un arbre d'entraînement de turbomachine d'aéronef autour d'un axe X, comprenant au moins un palier à éléments roulants destiné à être monté autour dudit arbre et un support de palier comportant un logement cylindrique de réception d'une bague externe dudit palier, ladite bague externe comprenant une première portion cylindrique définissant une piste de roulement des éléments roulants, une bride annulaire de fixation audit support de palier et une seconde portion cylindrique liant la première portion à la bride et comportant une rangée annulaire d'ouvertures traversantes et délimitant entre elles des colonnettes conférant une souplesse à la bague externe, ledit ensemble comprenant un dispositif de retenue axiale de la première portion de la bague externe à l'intérieur du logement du support de palier lors d'une rupture de la seconde portion et d'une désolidarisation de la première portion vis-à-vis du support de palier, ledit dispositif de retenue comportant des premières dents de crabot disposées autour de la première portion et configurées pour coopérer avec des secondes dents de crabot complémentaires à l'intérieur du logement du support de palier.

Selon la présente invention, les premières dents de crabot ont leurs périphéries externes libres qui sont configurées pour coopérer par effet de coin en direction tangentielle avec des surfaces internes complémentaires du logement du support de palier, lorsque la désolidarisation précitée intervient, et/ou les secondes dents de crabot ont leurs périphéries internes libres qui sont configurées pour coopérer par effet de coin en direction tangentielle avec des surfaces externes complémentaires de la bague externe, lorsque la désolidarisation précitée intervient. Cette configuration présente l'avantage de générer un verrouillage concentrique (c'est-à-dire à la fois axial, radial et circonférentiel) de la bague externe du palier à l'intérieur du support de palier dès la rupture, par exemple en torsion, de la liaison entre les première et seconde portions de la bague externe. En effet, la première portion de la bague externe est destinée à se verrouiller à l'intérieur du logement du support de palier par coincement en rotation des périphéries libres des premières et/ou des secondes dents de crabots avec les surfaces complémentaires correspondantes. Ceci permet donc de rendre solidaire et stabiliser de façon efficace la bague externe au support de palier, notamment après rupture de la seconde portion et désolidarisation de la première portion de la bague externe vis-à-vis du support de palier.

Selon l'invention, les surfaces complémentaires de l'un des éléments sont séparées par une gorge circonférentielle des dents de crabots de cet élément. De cette façon, la gorge circonférentielle permet de renforcer la retenue axiale de la bague externe à l'intérieur du support de palier (lors de la rupture de la seconde portion de la bague externe), tout en permettant d'alléger la masse et l'encombrement de l'ensemble dans la turbomachine.

Par ailleurs, les surfaces complémentaires internes ou externe, permettant le coincement des premières ou secondes dents de crabot, peuvent ainsi être formées dans cette gorge circonférentielle.

On notera que par « coincement » ou « effet de coin », la présente demande définit un verrouillage concentrique et mutuel, en particulier des périphéries libres des dents de crabot d'un des éléments choisis parmi la bague externe et le support de palier, avec les surfaces complémentaires de l'autre élément. Ainsi, les dents de crabot peuvent être agencées de manière à s'opposer à toute rotation (ou tout glissement) relative de la bague externe vis-à-vis du support de palier.

Par ailleurs, le dispositif de retenue de la présente demande permet de se dispenser de l'utilisation de chanfreins, de façon à réduire considérablement l'encombrement et simplifier la fabrication et l'assemblage du palier et du support du palier dans la turbomachine. Ceci permet en outre de réduire avantageusement la création et la projection de particules dans la turbomachine, dues à la présence des chanfreins. Ainsi, la durée de vie du palier et du support de palier est optimisée.

En outre, la présente invention permet de conserver une fonction suffisante du palier après la désolidarisation de sa bague externe par rapport au support de palier, par exemple pouvant être induite par une perte d'aubes de rotor d'une turbomachine. Ceci permet notamment de stabiliser et maîtriser efficacement un arrêt du moteur de façon plus tardive de la turbomachine en fonctionnement.

Selon une autre caractéristique de l'invention, les premières et/ou les secondes dents de crabot sont au nombre de trois à six, et chacune de ces dents de crabot a une étendue circonférentielle autour de l'axe X compris entre 60° et 180°, et en ce que l'effet de coin est réalisé après une rotation de la première portion à l'intérieur du logement du support de palier sur un angle compris entre 60° et 180°.

Cette caractéristique permet donc de favoriser rapidement le verrouillage concentrique et de façon simultanément des dents de crabot complémentairement les unes avec les autres dès la rotation d'au moins d'un angle de 60° de la première portion désolidarisée par rapport à l'axe X. Ceci présente l'avantage également de recentrer rapidement le palier par rapport à l'arbre d'entraînement après de la bague externe du support de palier. L'ensemble de support et de guidage de l'arbre d'entraînement selon l'invention peut comprendre une ou plusieurs caractéristiques suivantes, prises isolément les unes des autres ou en combinaison les unes avec les autres :
- les premières et/ou secondes dents de crabot ont leurs périphéries libres qui comprennent une rampe orientée circonférentiellement autour de l'axe X ;
- la rampe comprend une première extrémité circonférentielle située à une circonférence de diamètre D1 et une seconde extrémité circonférentielle située à une circonférence de diamètre D2 qui est supérieur à D1 ;
- les surfaces complémentaires configurées pour coopérer avec les dents de crabot ont un diamètre D3 compris entre les diamètres D1 et D2 ;
- le nombre de surfaces complémentaires d'un des éléments choisi parmi le support de palier et la bague externe, est identique au nombre de dents de crabots de cet élément A;
- les surfaces complémentaires sont alignées axialement avec les dents de crabot et sont destinées à être situées dans un plan P avec les dents de crabot de l'autre élément ;
- une bague est frettée à l'intérieur du logement et comprend une surface cylindrique interne entourant une surface cylindrique externe de la première portion de la bague pour délimiter avec cette surface un espace annulaire de formation d'un film d'huile d'amortissement ;
- la bague externe est entièrement logée dans le support du palier ;
- les premières dents de crabot sont situées entre la seconde portion et la bague frettée ;
- la gorge est située sur la première portion de la bague externe ;
- la gorge est disposée en amont de la rampe des premières dents ou des surfaces externes complémentaires de la bague externe ;
- la gorge est située sur un évidement annulaire d'une virole annulaire interne du support de pallier ;
- la gorge est disposée en aval des secondes dents de crabot ou des surfaces internes complémentaires du support de palier ; et
- la bague externe (21) comprend un amortisseur à compression de film d'huile (24a) autour d'une face cylindrique externe (23b) de la première portion (210), l'amortisseur (24a) comprend des rainures annulaires (24b) disposées sur chaque extrémité de l'amortisseur (24a).

L'invention porte également sur une turbomachine, en particulier d'aéronef, comportant un ensemble de support et de guidage disposant d'une ou plusieurs des caractéristiques décrites ci-avant.

### Brève description des figures

D'autres caractéristiques et avantages de l'invention apparaîtront au cours de la lecture de la description détaillée qui va suivre pour la compréhension de laquelle on se reportera aux dessins annexés dans lesquels :
[Fig. 1] la figure 1 est une vue schématique en coupe axiale et partielle d'un module d'une turbomachine utilisant un ensemble de support et de guidage de l'art antérieur ;
[Fig. 2] la figure 2 est une vue schématique en coupe axiale et partielle d'un dispositif de retenue axiale d'un ensemble de support et de guidage selon l'art antérieur ;
[Fig. 3] la figure 3 est une vue schématique en perspective et partielle d'une bague externe d'un palier à éléments roulants selon l'invention ;
[Fig. 4a] la figure 4a est une vue schématique en perspective d'un support de palier selon l'invention ;
[Fig. 4b] la figure 4b est une vue agrandie du support de palier de la figure 4a ;
[Fig. 5] la figure 5 est une vue schématique en perspective d'un assemblage de la bague externe de la figure 3 et du support de palier des figures 4a et 4b ;
[Fig. 6] la figure 6 est une vue schématique en coupe et partielle d'un dispositif de retenue selon l'assemblage de la figure 5 et avant la désolidarisation de la bague externe de la figure 3 par rapport au support de palier des figures 4a et 4b ;
[Fig. 7] la figure 7 est une vue schématique en coupe et partielle du dispositif de retenue de l'assemblage des figures 5 et 6 ;
[Fig. 8] la figure 8 est une demi vue schématique en coupe et partielle du dispositif de retenue selon l'assemblage de la figure 5 et après la désolidarisation de la bague externe de la figure 3 par rapport au support de palier des figures 4a et 4b ;
[Fig. 9] la figure 9 représente schématiquement le principe général du dispositif de retenue selon l'invention au repos et avec effet de coin.

### Description détaillée de l'invention

D'une manière générale, dans la description ci-après, les termes « longitudinal » et « axial » qualifient l'orientation d'éléments structurels s'étendant selon la direction d'un axe longitudinal X. Cet axe X peut être confondu avec un axe de rotation d'un moteur d'une turbomachine. Le terme « radial » qualifie une orientation d'éléments structurels s'étendant selon une direction perpendiculaire à l'axe X. Les termes « intérieur » et « extérieur », et « interne » et « externe » sont utilisés en référence à un positionnement par rapport à l'axe X. Ainsi, un élément structurel s'étendant selon l'axe X comporte une face intérieure tournée vers l'axe X et une surface extérieure, opposée à sa surface intérieure.

La figure 1 montre une partie d'un module d'une turbomachine d'aéronef, par exemple un turboréacteur ou un turbopropulseur, tel que décrit précédemment dans l'arrière-plan technique de la présente demande.

Ce module de turbomachine comprend un palier 2 à éléments roulants 20 coopérant avec un support de palier 3 pour former un ensemble 10 de support et de guidage d'un arbre 1 d'entraînement en rotation autour d'un axe longitudinal X. Plus particulièrement, l'arbre 1 est supporté en rotation par rapport au support de palier 3 qui est généralement fixe et lié à un carter (non représenté) de la turbomachine par le palier 2. Une bague externe 21 du palier 2 est disposée dans un logement 30 cylindrique du support de palier 3. Cette bague 21 est solidaire du support de palier 2 par une bride annulaire de fixation liant la bague 21 au support de palier 3, par exemple par des fixations de type boulons (non représentées sur la figure 1).

La figure 2 montre l'ensemble 10 de support et de guidage de l'arbre 1 selon l'art antérieur, tel que décrit précédemment dans l'arrière-plan technologique de la présente demande. Cet ensemble 10 de l'art antérieur comprend un dispositif de retenue 5 axiale d'une première portion 210 de la bague 21 du palier 2 à l'intérieur du logement 30 du support de palier 3. Ce dispositif de retenue 5 comprend des dents de crabot 52, 53 disposées à la fois sur la bague 21 et le support de palier 3 de façon à retenir axialement la bague 21 à l'intérieur du support de palier 3 lorsque la fixation entre ces deux éléments 21, 3 est désolidarisée.

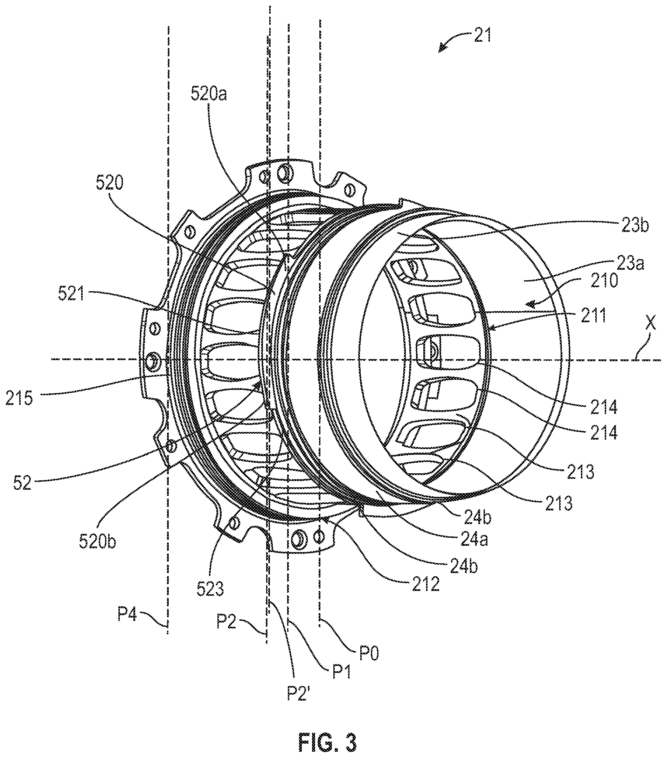

Selon l'invention, l'ensemble 10 de support et de guidage de l'arbre 1 peut être également installé dans le module de turbomachine de la figure 1. L'ensemble 10 et/ou l'un des éléments 21, 3 de cet ensemble 10 de l'invention sont illustrés sur les figures 3 à 9.

L'une des particularités de l'invention réside dans le fait que le dispositif de retenue 5 est destiné à réaliser un verrouillage concentrique de la bague 21 à l'intérieur du support de palier 3.

Sur la figure 3 est représentée en perspective et partiellement, la bague externe 21 du palier 2 selon l'invention. La bague 21 est une pièce cylindrique creuse s'étendant autour d'un axe longitudinal qui peut être confondu avec l'axe X de la turbomachine. Cette bague 21 comprend, d'amont en aval, une bride annulaire 212 de fixation, une seconde portion cylindrique 211 et une première portion cylindrique 210 qui sont monoblocs.

La bride 212 s'étend vers l'extérieur d'un bord périphérique 215 de la bague 21. Ce bord périphérique 215 passe sensiblement par un plan P4 qui est perpendiculaire à l'axe X et disposé du côté amont de la bague 21 .

La seconde portion 211 comprend des colonnettes 213 qui sont régulièrement réparties autour de la seconde portion 211 et des ouvertures traversantes 214 séparant les colonnettes 213 les unes des autres. Les ouvertures 214 et les colonnettes 213 ont une longueur axiale identique, mais peuvent avoir une largeur périphérique différente. La largeur des ouvertures 214 est de préférence plus grande que celle des colonnettes 213, de façon à apporter de la souplesse à cette seconde portion 211. Ces colonnettes 213 et ouvertures 214 peuvent s'étendre axialement entre 50% à 90% de la longueur axiale totale de la seconde portion 211.

La première portion 210 comprend une face cylindrique interne 23a configurée pour être disposée du côté du palier 2 et une face cylindrique externe 23b configurée pour être disposée du côté du support de palier 3.

Des premières dents de crabot 52 sont disposées autour de la face externe 23b de la première portion 210 et passent sensiblement par un plan P2' transversal à l'axe X. Chaque première dent de crabot 52 a une étendue circonférentielle comprise entre 60° et 180° autour de l'axe X. Par exemple, sur la figure 3, les premières dents de crabot 52 sont au nombre de trois répartis à 120° de façon équidistante les unes des autres.

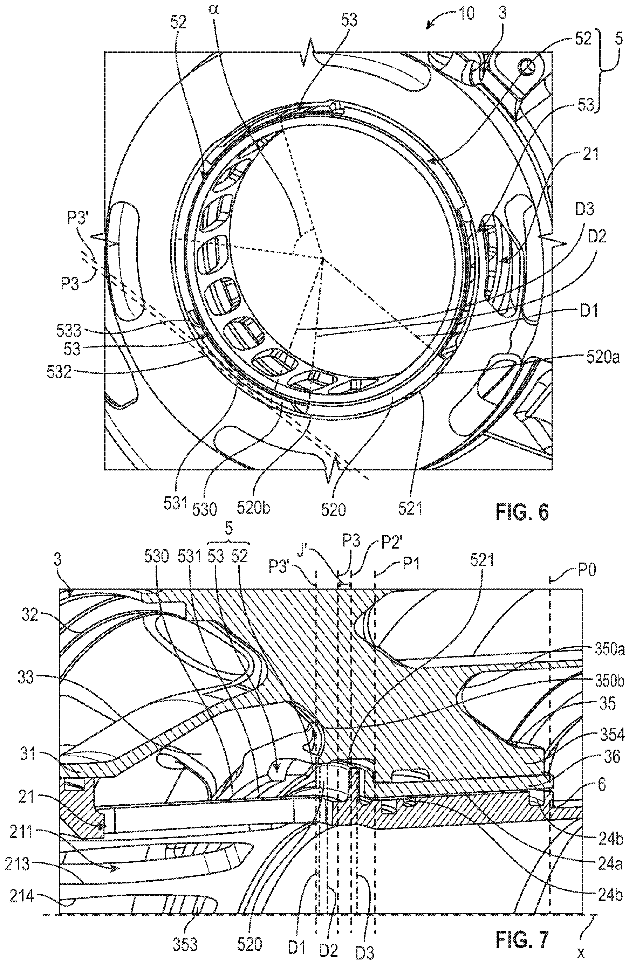

Chaque première dent de crabot 52 comprend une rampe 520 sur sa périphérie externe 521 libre. La rampe 520 est disposée du côté de la seconde portion 211 et passe sensiblement par le plan P2'. La rampe 520 comprend une première extrémité circonférentielle 520a située à une circonférence de diamètre D1 et une seconde extrémité circonférentielle 520b située à une circonférence de diamètre D2 (figures 6 et 7). Le diamètre D2 étant supérieur au diamètre D1 (à savoir les diamètres externes par rapport à l'axe de révolution de la bague externe), par exemple pour que la périphérie externe 521 de la rampe 520 présente une forme générale en arc d'ellipse. Le diamètre D1 peut être inférieur de 5% à 50% par rapport au diamètre D2, représentant le diamètre maximal de la rampe 520. Les première 520a et seconde 520b extrémités délimitent circonférentiellement la rampe 520 avec l'étendue circonférentielle précitée ci-dessus. Par exemple, sur la figure 3, les première 520a et seconde 520b sont disposées sensiblement entre 90° et 120° autour de l'axe X. L'étendu circonférentielle et les diamètres D1, D2 de la rampe 520 sont par exemple choisis en fonction des dimensions de la bague 21, de la vitesse de rotation de l'arbre d'entraînement 1 et/ou du type de turbomachine. La face externe 23b comprend en outre une gorge 523 circonférentielle qui est disposée en amont de la rampe 520 et adjacente à la seconde portion 211. La gorge 523 peut avoir une forme annulaire s'étendant circonférentiellement autour de la face externe 23b de la première portion 210.

Selon un second mode de réalisation de l'invention qui n'est pas représentée par les figures de la présente demande, des surfaces externes (dit de coincement) peuvent être disposées autour de la face externe 23b de la première portion 210. Les surfaces externes peuvent être séparées par la gorge 523 des premières dents de crabot 52. Les surfaces externes peuvent passer sensiblement par un plan P2 qui est parallèle et en amont au plan P2' des premières dents de crabot 52. Chaque surface externe peut s'étendre circonférentiellement autour de l'axe X avec une circonférence de diamètre D3' (il s'agira également du diamètre externe par rapport à l'axe de révolution de la bague externe). Le diamètre D3' peut être inférieur au diamètre externe maximal de la rampe 520. Les surfaces externes peuvent avoir une forme générale en arc d'ellipse similaire à la périphérie externe 521 de la rampe 520. Un amortisseur à compression de film d'huile 24a (ou « squeeze film damper » SQF selon la terminologie anglo-saxonne) peut être disposé autour de la face externe 23b. Plus particulièrement, cet amortisseur 24a s'étend axialement entre un plan P1 disposé du côté des premières dents de crabot 52 et un plan P0 disposé du côté aval de la première portion 210. Ces plans P0 et P1 sont perpendiculaires à l'axe X. Par ailleurs, l'amortisseur 24a peut comprendre des rainures annulaires 24b disposées sur chaque extrémité de l'amortisseur 24a. Ces rainures annulaires 24b peuvent être configurées pour recevoir des segments annulaires ouverts, de façon à laisser passer axialement des fuites d'huile de l'amortisseur 24a vers l'extérieur de la bague 21.

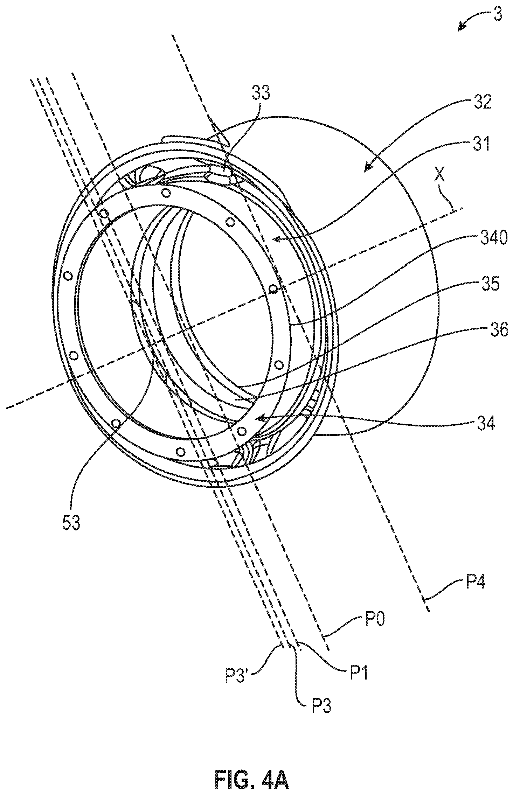

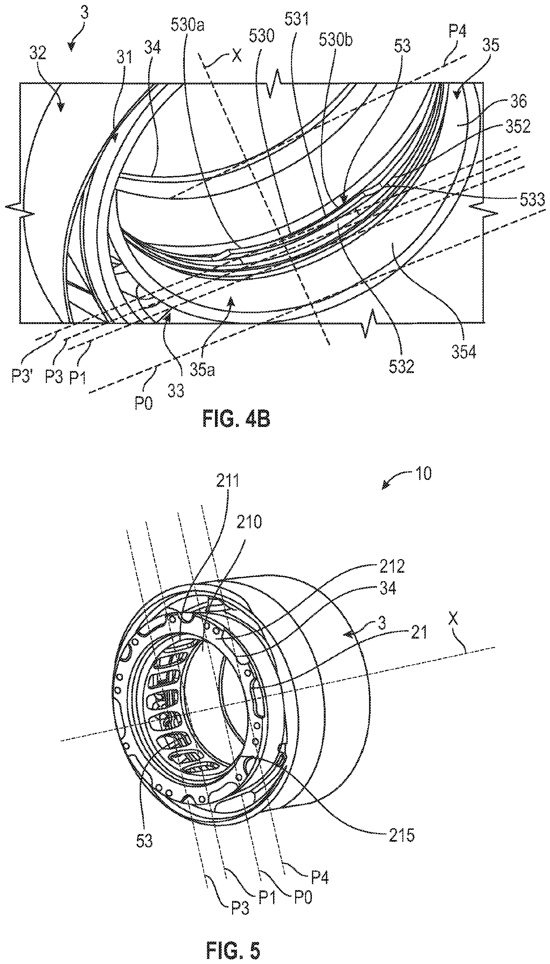

En référence aux figures 4a et 4b, le support de palier 3 a une forme de révolution s'étendant autour d'un axe longitudinal qui peut être confondu avec l'axe X de la turbomachine. Le support de palier 3 comprend deux parois annulaires interne 31 et externe 32 qui sont reliées entre elles par des bras 33. La paroi externe 32 est configurée pour se lier à un carter de la turbomachine et la paroi interne 31 est configurée pour se lier et coopérer avec la bague externe 21 du palier 2. Les bras peuvent être pleins ou tubulaires (ou dit autrement creux) par exemple pour le passage de servitudes. Le support de palier 3 comprend en outre une virole annulaire interne 35 qui s'étend radialement à l'intérieur de la paroi interne 31. Les bras 33, la virole interne 35, les parois interne 31 et externe 32 sont monoblocs.

La paroi interne 31 peut comprendre une bride 34 de fixation s'étendant vers l'intérieur d'un bord périphérique 340. Ce bord périphérique passe sensiblement par un plan P4 transversal à l'axe X et qui est disposé en amont du support de palier 3.

La virole 35 peut comprendre des bords périphériques externes 350a, 350b reliant la virole 35 à la paroi interne 31 (visibles sur la figure 7).

La virole 35 comprend une face cylindrique interne 35a comportant, d'amont en aval, des secondes dents de crabots 53, un évidement annulaire 353 et une extrémité aval 354.

Les secondes dents de crabot 53 sont disposés sur un bord périphérique interne 352 qui passe sensiblement par un plan P3' transversal à l'axe X. Chaque seconde dent de crabot 53 peut avoir une étendue circonférentielle comprise entre 60° et 180° autour de l'axe X. Par exemple, les secondes dents de crabots 53 sont au nombre de trois réparties à 120° de façon équidistante les unes des autres.

L'évidement annulaire 353 comprend en outre une gorge 533 circonférentielle qui est disposée en aval des secondes dents de crabot 53. Cette gorge est disposée en aval du plan P3' des secondes dents de crabot 53. La gorge 533 peut avoir une forme annulaire s'étendant circonférentiellement autour de la face interne 35a de la virole 35.

Des surfaces internes 532 sont disposées autour de la face interne 35b de la virole. Ces surfaces internes 532 (dit également de coincement) sont configurées pour coopérer de façon complémentaire avec les périphéries externes 521 de la bague 21. Les surfaces internes 532 passent sensiblement par un plan P3 parallèle et en aval du plan P3'. Les surfaces internes 532 sont séparées par la gorge 533 des secondes dents de crabot 53. Chaque surface interne 532 s'étend circonférentiellement autour de l'axe X avec une circonférence de diamètre D3 (à savoir le diamètre interne par rapport à l'axe de révolution du support de palier). Le diamètre D3 des surfaces internes 532 peut être inférieur au diamètre interne minimal de la seconde dent de crabot 53. De préférence, le diamètre D3 est compris entre les diamètres D1 et D2 de la rampe 520 de la bague 21. Les surfaces internes 532 peuvent avoir une forme générale en arc d'ellipse similaire à la périphérie externe 521 de la rampe 520.

Une bague annulaire de frette 36 est disposée autour de l'extrémité aval de la face cylindrique interne 35a de la virole 35. Cette bague de frette 36 s'étend sensiblement entre un plan P1 disposé du côté des secondes dents de crabots 53 et un plan P0 disposé du côté aval de la virole 35.

L'évidement annulaire 353 de la virole 35 s'étend sensiblement entre le plan P3 des secondes dents de crabots 53 et le plan P1 de la bague de frette 36. Selon un second mode de réalisation de l'invention qui n'est pas représentée par les figures de la présente demande, chaque seconde dent de crabot 53 peut comprendre une rampe sur sa périphérie externe 531 libre. Cette rampe passe sensiblement par le plan P3' de la seconde dent de crabot 53. Cette rampe de la périphérie externe libre est configurée pour coopérer de façon complémentaire avec une des surfaces externes de la bague 21. La rampe peut comprendre une extrémité circonférentielle située sur une circonférence de diamètre D1' et une autre extrémité circonférentielle située à une circonférence de diamètre D2' (on se réfère aux diamètres internes par rapport à l'axe de révolution du support de palier). Le diamètre D2' étant supérieur au diamètre D1', par exemple pour que la périphérie interne 531 de la rampe présente une forme générale en arc d'ellipse. Le diamètre D1' peut être inférieur de 5% à 50% par rapport au diamètre D2'. L'étendu circonférentielle et les diamètres D1', D2' de la rampe sont par exemple choisis en fonction des dimensions du support de palier 3, de la vitesse de rotation l'arbre d'entrainement 1 et/ou du type de turbomachine. Les diamètres D1', D2' et D3' ne sont pas représentés sur les figures.

Les figures 5 à 9 représentent différentes vues schématiques de l'ensemble 10 de l'invention comprenant la bague externe 21 assemblée avec le support de palier 3.

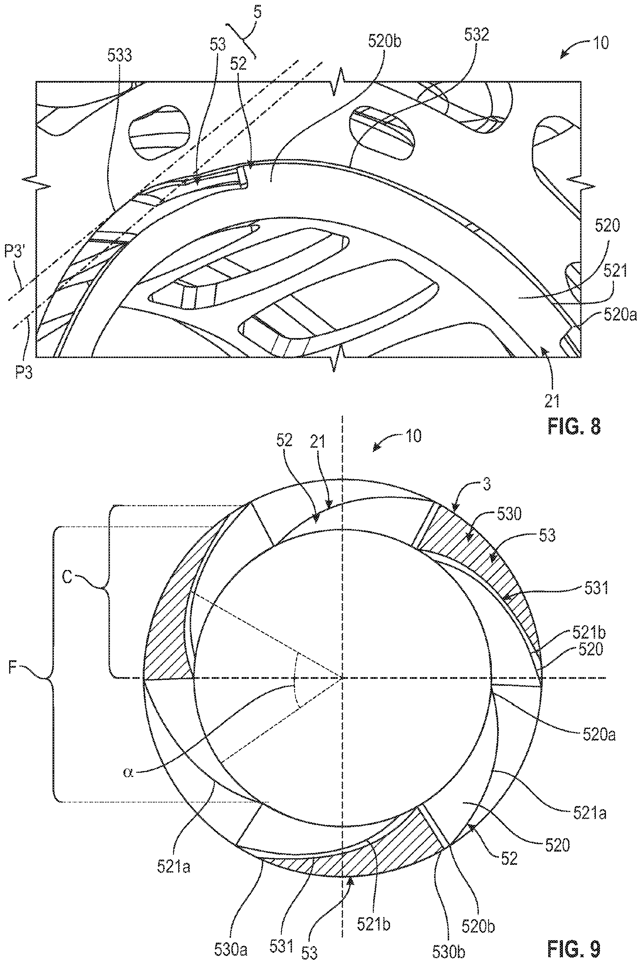

Plus particulièrement, les figures 5 à 7 représentent l'ensemble 10 selon l'invention, dans lequel le dispositif de retenue 5 est au repos (c'est-à-dire en l'absence de désolidarisation de la bague 21) et la figure 8 représente l'ensemble 10 selon l'invention dans lequel le dispositif de retenue 5 est déployé pour réaliser l'effet de coin (c'est-à-dire après désolidarisation de la bague 21 vis-à-vis du support de palier 3).

Sur la figure 5 est représentée la fixation de la bague 21 au support de palier 3 par l'intermédiaire des brides de fixation 212, 34 et passant sensiblement par le plan P4. De préférence, la bride 212 de la bague 21 est liée à la bride 34 de la paroi interne 31 du support de palier 3 par des fixations de type boulons. Ceci assure une immobilisation de la bague externe 21 du palier 2 au support de palier 3.

En référence aux figures 5 et 6, la seconde portion 211 de la bague 21 est disposée dans la paroi interne 31 en amont du support de palier 3 et s'étend au moins sensiblement entre le plan P4 et le plan P3'. Les colonnettes 213 de la seconde portion 211 sont résistantes et solidaires à la bague 21, de façon à lier la première portion 210, qui est apte à coopérer avec le palier 2 mobile, au support de palier 3 fixe.

La première portion 210 de la bague 21 est disposée de façon coaxiale avec la virole interne 35 du support de palier 3 et ils s'étendent au moins sensiblement entre le plan P3' et le plan P0. Plus particulièrement, l'extrémité aval de la première portion 210, qui comprend notamment l'amortisseur 24a et les rainures annulaires 24b, est disposée de façon coaxiale avec l'extrémité aval 354 de la virole 35, qui comprend notamment la bague de frette 36, et s'étendent au moins sensiblement entre le plan P1 et le plan P0. Un espace annulaire 6 avec un faible jeu radial est formé entre la bague de frette 36 du support de palier 3 et l'amortisseur 24a de la bague 21, notamment pour assurer un minimum de lubrification en huile et d'étanchéité de l'ensemble 10. La bague externe 21 est assemblée à l'intérieur du logement 30 du support de palier 3, notamment par un engagement axial, de façon à ce que les premières dents de crabot 52 de la bague 21 passent entre les dents de crabot 53 du support de palier 3. Les premières dents de crabot 52 de la bague 21 s'insèrent dans l'évidement annulaire 353 du support de palier 3. Ceci permet de disposer les premières dents de crabot 52 de façon décalée angulairement d'un angle a, et derrière les secondes dents de crabot 53. L'angle α peut être compris entre 20° et 60°. De préférence, les premières dents de crabot 52 sont décalées d'un angle de 60° par rapport aux secondes dents de crabot 53, lorsque l'ensemble 10 comprend des dents de crabot au nombre de trois (figure 6). Par ailleurs, les premières dents de crabot 52 sont distantes des secondes dents de crabot 53 axialement notamment avec un jeu axial J'. Le jeu axial J' s'étend entre le plan P3 et le plan P2'. De préférence, les premières dents de crabot 52 sont alignées radialement dans le plan P3 des surfaces internes 531 du support de palier 3.

De manière avantageuse, en fonctionnement au repos du dispositif de retenue 5 (figures 6 et 7), par exemple avant la rupture des colonnettes 213 en torsion, la bague 21 se déplace radialement jusqu'à contact entre la bague de frette 36 du support de palier 3 et l'amortisseur 24a de la bague 21. Sous l'effet du balourd de l'arbre 1 d'entraînement et la rotation du palier 2 permettent de faire rouler la bague 21 à l'intérieur de la bague de frette 36. Ceci génère un couple dans la bague 21 qui est supportée par les colonnettes 213. Ce couple augmente jusqu'à ce que l'effort tangent qui en résulte provoque un glissement de la bague externe 21 du palier sur la bague de frette 36 du support de palier. Sur la figure 8, le dispositif de retenue 5 selon l'invention prend une configuration différente de son fonctionnement au repos, notamment dans le cas où la seconde portion 211 est rompue. Par exemple, une perte d'aubes de rotor peut provoquer une rupture des colonnettes 213 en torsion (non représentée). La première portion 210 est donc désolidarisée de la seconde portion 211 fixe, et elle est entraînée en rotation par les éléments roulants 20 du palier 2 tel que décrit précédemment dans l'arrière-plan technologique de la présente demande.

Afin de limiter la rotation de cette première portion 210, l'une des périphéries libres 521, 531 des dents de crabot d'un des éléments 21, 3 se coincent en rotation avec l'une des surfaces complémentaires 532 des dents de crabot de l'autre élément 3, 21.

Sur l'exemple de la figure 8, ce verrouillage par effet de coin des dents de crabots permet d'aligner axialement et radialement les surfaces internes 532 complémentairement avec les rampes 520 des périphéries externes 521 libres des premières dents de crabots 52 qui passe sensiblement par un plan P qui est perpendiculaire à l'axe X.

Le plan P alignant les rampes 520 de la bague 21 et les surfaces internes 532 du support de palier 3 correspond sensiblement au plan P3. Ainsi, après coincement total des rampes 520 avec les surfaces internes 532, les premières dents de crabots 52 de la bague 21 sont destinées à être situées sur le plan P3 qui est placé en aval du plan P3' des secondes dents de crabot 53 du support de palier 3.

Dans le cas du second mode de réalisation (non représenté sur les figures), les rampes des secondes dents de crabot 53 peuvent être alignées axialement et radialement avec les surfaces externes complémentaires de la bague 21. Dans cette configuration, les premières dents de crabots 52 sont destinées à être disposées suivant le plan P2 qui est également placé derrière le plan P3' des secondes dents de crabot 53, après coincement total des rampes du support de palier 3 avec les surfaces externes complémentaires de la bague 21.

De préférence, l'effet de coin simultané des dents de crabots 52, 53 d'un des éléments 21, 3 sur les surfaces complémentaires de l'autre élément 3, 21 peut être obtenu dès que la première portion 210 de la bague 21 a réalisé une rotation d'au moins 60° autour de l'axe X. Ces dents de crabots 52, 53 se coincent totalement les unes surfaces complémentaires appropriées d'un des éléments 3, 21 lorsque la première portion 210 a réalisé une rotation de maximum 180° autour de l'axe X.

Avantageusement, après la rupture des colonnettes 213 en torsion, cette force de torsion qui est liée à une reptation sous fort balourd de l'arbre 1 d'entraînement et après consommation de l'amortisseur 24a permettent de plastifier les périphéries libres 521, 531 respectivement avec les surfaces complémentaires 532 des dents de crabots 52, 53 lors de leurs coincements en rotation. Ainsi, la première portion 210 désolidarisée de la bague 21 est totalement encastrée, de façon irréversible, à l'intérieur du logement 30 du support de palier 3.

La figure 9 représente schématiquement le principe de fonctionnement du dispositif de retenue de la présente demande.

Le dispositif de retenue 5 est au repos F, lorsque les dents de crabots d'un des éléments 21, 3 sont décalées angulairement (notamment de l'ange α) et axialement (notamment par le jeux axial J' non visible sur la figure 9) des autres dents de crabots de l'autre élément 3, 21.

Le dispositif de retenue réalise l'effet de coin C, lorsque les dents de crabots d'un des éléments 21, 3 sont alignées angulairement et axialement avec les autres dents de crabots de l'autre élément 3, 21.

L'invention apporte plusieurs avantages qui sont, notamment de :
- maintenir la bague externe désolidarisée (notamment rompue en torsion) du support de palier notamment par un effet de coincement des organes à crabots entre eux,
- stabiliser efficacement l'arbre d'entraînement de la turbomachine, notamment en cas de perte d'aubes,
- conserver la fonction du palier à éléments roulants après désolidarisation de la fixation de la bague externe au support de palier,

- recentrer l'arbre d'entraînement après la désolidarisation de la bague externe du palier,
- limiter la dégradation du palier et du support de palier en fonctionnement,
- réduire les impacts subis par la turbomachine après désolidarisation de la bague externe du palier (notamment par l'absence des chanfreins sur les organes à crabots),
- simplifier et désencombrer l'assemblage et le fonctionnement du dispositif de retenue sur la turbomachine ;
- s'adapter facilement sur les turbomachines actuelles.

Globalement, cette solution proposée est simple, efficace et économique à réaliser et à assembler sur une turbomachine, tout en renforçant la durée de vie du palier et du support de palier en fonctionnement.

## Revendications

1. Ensemble (10) de support et de guidage d'un arbre (1) d'entraînement de turbomachine d'aéronef autour d'un axe (X), comprenant au moins un palier (2) à éléments roulants destiné à être monté autour dudit arbre (1) et un support de palier (3) comportant un logement (30) cylindrique de réception d'une bague externe (21) dudit palier (2), ladite bague externe (21) comprenant une première portion (210) cylindrique définissant une piste de roulement des éléments roulants, une bride annulaire (212) de fixation audit support de palier (3) et une seconde portion (211) cylindrique liant la première portion (210) à la bride (212) et comportant une rangée annulaire d'ouvertures (214) traversantes et délimitant entre elles des colonnettes (213) conférant une souplesse à la bague externe (21), ledit ensemble (10) comprenant un dispositif de retenue (5) axiale de la première portion (210) de la bague externe (21) à l'intérieur du logement (30) du support de palier (3) lors d'une rupture de la seconde portion (211) et d'une désolidarisation de la première portion (210) vis-à-vis du support de palier (3), ledit dispositif de retenue (5) comportant des premières dents de crabot (52) disposées autour de la première portion (210) et configurées pour coopérer avec des secondes dents de crabot (53) complémentaires à l'intérieur du logement (30) du support de palier (3),
les premières dents de crabot (52) ayant leurs périphéries externes (521) libres qui étant configurées pour coopérer par effet de coin en direction tangentielle avec des surfaces internes (532) complémentaires du logement (30) du support de palier (3), lorsque la désolidarisation précitée intervient, et/ou les secondes dents de crabot (53) ayant leurs périphéries internes (531) libres qui étant configurées pour coopérer par effet de coin en direction tangentielle avec des surfaces externes complémentaires de la bague externe (21), lorsque la désolidarisation précitée intervient, **caractérisé en ce que** les surfaces (532) complémentaires de l'un des éléments (3, 21) choisis parmi le support de palier (3) et la bague externe (21) sont séparées par une gorge (533, 523) circonférentielle des dents de crabots (52, 53) de cet élément (3, 21).

2. Ensemble selon la revendication 1, **caractérisé en ce que** les premières (52) et/ou les secondes (53) dents de crabot sont au nombre de trois à six, et chacune de ces dents de crabot (52, 53) a une étendue circonférentielle autour de l'axe (X) comprise entre 60° et 180°, et **en ce que** l'effet de coin est réalisé après une rotation de la première portion (210) à l'intérieur du logement (30) du support de palier (3) sur un angle compris entre 60° et 180°.

3. Ensemble selon la revendication 1 ou 2, **caractérisé en ce que** les premières (52) et/ou secondes (53) dents de crabot ont leurs périphéries libres qui comprennent une rampe (520, 530) orientée circonférentiellement autour de l'axe (X).

4. Ensemble selon la revendication 3, **caractérisé en ce que** la rampe (520, 530) comprend une première extrémité circonférentielle (520a, 530a) située à une circonférence de diamètre D1 et une seconde extrémité circonférentielle (520b, 530b) située à une circonférence de diamètre D2 qui est supérieur à D1, et **en ce que** les surfaces complémentaires (532) configurées pour coopérer avec les dents de crabot (52, 53) ont un diamètre D3 compris entre les diamètres D1 et D2.

5. Ensemble selon l'une des revendications 1 à 4, **caractérisé en ce que** le nombre de surfaces complémentaires d'un des éléments choisis parmi le support de palier (3) et la bague externe (21), est identique au nombre de dents de crabots (52, 53) de cet élément (3, 21), et **en ce que** les surfaces complémentaires sont alignées axialement avec les dents de crabot (52, 53) et sont destinées à être situées dans un plan (P) avec les dents de crabot (52, 53) de l'autre élément (3, 21).

6. Ensemble selon l'une des revendications 1 à 5, **caractérisé en ce qu'**une bague (36) est frettée à l'intérieur du logement (30) et comprend une surface cylindrique interne entourant une surface cylindrique externe de la première portion (210) de la bague (21) pour délimiter avec cette surface un espace annulaire (6) de formation d'un film d'huile d'amortissement.

7. Ensemble selon l'une des revendications 1 à 6, **caractérisé en ce que** la bague externe (21) est entièrement logée dans le support du palier (3).

8. Ensemble selon la revendication 6, **caractérisé en ce que** les premières dents de crabot (52) sont situées entre la seconde portion (211) et la bague (36) frettée.

9. Ensemble selon l'une des revendications 1 à 8, **caractérisé en ce que** la gorge (523) est située sur la première portion (210) de la bague externe (21).

10. Ensemble selon la revendication 9, **caractérisé en ce que** la gorge (523) est disposée en amont de la rampe (520) des premières dents (52) ou des surfaces externes complémentaires de la bague externe (21).

11. Ensemble selon l'une des revendications 1 à 8, **caractérisé en ce que** la gorge (533) est située sur un évidement annulaire (353) d'une virole annulaire interne (35) du support de pallier (3).

12. Ensemble selon la revendication 11, **caractérisé en ce que** la gorge (533) est disposée en aval des secondes dents de crabot (53) ou des surfaces internes complémentaires (532) du support de palier (3).

13. Ensemble selon l'une des revendications 1 à 12, **caractérisé en ce que** la bague externe (21) comprend un amortisseur à compression de film d'huile (24a) autour d'une face cylindrique externe (23b) de la première portion (210), l'amortisseur (24a) comprend des rainures annulaires (24b) disposées sur chaque extrémité de l'amortisseur (24a).

14. Turbomachine, en particulier d'aéronef, comportant un ensemble (10) de support et de guidage selon l'une des revendications précédentes.

## Patentansprüche

1. Anordnung (10) zur Lagerung und Führung einer Antriebswelle (1) eine Turbomaschine um eine Achse (X), umfassend mindestens ein Lager (2) mit Wälzkörpern, dazu bestimmt, um die Welle (1) herum montiert zu werden, und einen Lagerhalterung (3), umfassend ein zylindrisches Gehäuse (30) zum Aufnehmen eines externen Ringes (21) des Lagers (2), wobei der externe Ring (21) einen ersten zylindrischen Abschnitt (210) umfasst, der eine Rollfläche der Wälzkörper definiert, einen ringförmigen Flansch (212) zur Befestigung an Lagerhalterung (3) und einen zweiten zylindrischen Abschnitt (211), der den ersten Abschnitt (210) mit dem Flansch (212) verbindet und eine ringförmige Durchgangsöffnungsreihe (214) umfasst, und zwischen sich Stäbe (213) eingrenzt, die dem externen Ring (21) Flexibilität verleihen, wobei die Anordnung (10) eine axiale Rückhaltevorrichtung (5) des ersten Abschnitts (210) des externen Ringes (21) im Inneren des Gehäuses (30) des Lagerhalterung (3) bei einem Bruch des zweiten Abschnitts (211) und einer Ablösung des ersten Abschnitts (210) gegenüber dem Lagerbock (3) umfasst, wobei die Rückhaltevorrichtung (5) erste Kupplungszähne (52) umfasst, die um den ersten Abschnitt (210) angeordnet sind, und konfiguriert sind, um mit ergänzenden zweiten Kupplungszähnen (53) im Inneren des Gehäuses (30) des Lagerhalterung (3) zusammenzuwirken,
wobei die ersten Kupplungszähne (52) ihre freien externen Peripherien (521) aufweisen, die konfiguriert sind, um durch Keilwirkung in tangentialer Richtung mit ergänzenden Innenoberflächen (532) des Gehäuses (30) des Lagerhalterung (3) zusammen zu wirken, wenn die zuvor genannte Ablösung auftritt, und/oder die zweiten Kupplungszähne (53) ihre freien internen Peripherien (531) aufweisen, die konfiguriert sind, um durch Keilwirkung in tangentialer Richtung mit ergänzenden externen Oberflächen des externen Ringes (21) zusammen zu wirken, wenn die zuvor genannte Ablösung auftritt, **dadurch gekennzeichnet, dass** die ergänzenden Oberflächen (532) des einen der Elemente (3, 21), ausgewählt aus dem Lagerhalterung (3) und dem externen Ring (21) durch eine umlaufende Nut (533, 523) der Kupplungszähne (52, 53) dieses Elements (3, 21) getrennt sind.

2. Anordnung nach Anspruch 1, **dadurch gekennzeichnet, dass** die ersten (52) und/oder die zweiten (53) Kupplungszähne von drei bis sechs an der Zahl sind, und jeder der Kupplungszähne (52, 53) eine umfängliche Erstreckung um die Achse (X) herum aufweist, die zwischen 60° und 180° liegt, und dadurch, dass die Keilwirkung nach einer Drehung des ersten Abschnitts (210) im Inneren des Gehäuses (30) des Lagerhaletrung (3) über einen Winkel erfolgt, der zwischen 60° und 180° liegt.

3. Anordnung nach Anspruch 1 oder 2, **dadurch gekennzeichnet, dass** die ersten (52) und/oder zweiten (53) Kupplungszähne ihre freien Peripherien aufweisen, die eine Rampe (520, 530) aufweisen, die umfänglich um die Achse (x) herum ausgerichtet sind.

4. Anordnung nach Anspruch 3, **dadurch gekennzeichnet, dass** die Rampe (520, 530) ein erstes umfängliches Ende (520a, 530a) umfasst, das sich an einem Umfang im Durchmesser D1 befindet, und ein zweites umfängliches Ende (520b, 530b), das sich an einem Umfang im Durchmesser D2 befindet, der größer als D1 ist, und dadurch, dass die ergänzenden Oberflächen (532), die konfiguriert sind, um mit den Kupplungszähnen (52, 53) zusammen zu wirken, einen Durchmesser D3 aufweisen, der zwischen den Durchmessern D1 und D2 liegt.

5. Anordnung nach einem der Ansprüche 1 bis 4, **dadurch gekennzeichnet, dass** die Anzahl an ergänzenden Oberflächen eines der Elemente, die aus dem Lagerhalterung (3) und dem externen Ring (21) ausgewählt sind, gleich der Anzahl an Kupplungszähnen (52, 53) dieses Elements (3, 21) ist, und dadurch, dass die ergänzenden Oberflächen axial mit den Kupplungszähnen (52, 53) ausgerichtet sind, und dazu bestimmt sind, sich in einer Ebene (P) mit den Kupplungszähnen (52, 53) des anderen Elements (3, 21) zu befinden.

6. Anordnung nach einem der Ansprüche 1 bis 5, **dadurch gekennzeichnet, dass** ein Ring (36) im Inneren des Gehäuses (30) aufgeschrumpft ist, und eine interne zylindrische Oberfläche umfasst, die eine externe zylindrische Oberfläche des ersten Abschnitts (210) des Ringes (21) umgibt, um mit dieser Oberfläche einen Ringraum (6) zur Bildung eines Dämpfungsölfilms zu begrenzen.

7. Anordnung nach einem der Ansprüche 1 bis 6, **dadurch gekennzeichnet, dass** der externe Ring (21) vollständig im Lagerbock (3) untergebracht ist.

8. Anordnung nach Anspruch 6, **dadurch gekennzeichnet, dass** sich die ersten Kupplungszähne (52) zwischen einem zweiten Abschnitt (211) und dem aufgeschrumpften Ring (36) befinden.

9. Anordnung nach einem der Ansprüche 1 bis 8, **dadurch gekennzeichnet, dass** sich die Nut (523) auf dem ersten Abschnitt (210) des externen Rings (21) befindet.

10. Anordnung nach Anspruch 9, **dadurch gekennzeichnet, dass** die Nut (523) stromaufwärts der Rampe (520) der ersten Zähne (52) oder der ergänzenden externen Oberflächen des externen Ringes (21) angeordnet ist.

11. Anordnung nach einem der Ansprüche 1 bis 8, **dadurch gekennzeichnet, dass** sich die Nut (533) auf einer ringförmigen Aussparung (353) eines ringförmigen internen Lüftungsrings (35) des Lagerhalterung (3) befindet.

12. Anordnung nach Anspruch 11, **dadurch gekennzeichnet, dass** die Nut (533) stromabwärts der zweiten Kupplungszähne (53) oder der ergänzenden Innenoberflächen (532) des Lagerhalterung (3) angeordnet ist.

13. Anordnung nach einem der Ansprüche 1 bis 12, **dadurch gekennzeichnet, dass** der externe Ring (21) einen Dämpfer mit Ölfilmverdichtung (24a) um eine externe zylindrische Seite (23b) des ersten Abschnitts (210) umfasst, wobei der Dämpfer (24a) ringförmige Nuten (24b) umfasst, die auf jedem Ende des Dämpfers (24a) angeordnet sind.

14. Turbomaschine, insbesondere eines Flugzeugs, das eine Anordnung (10) zur Lagerung und Führung nach einem der vorstehenden Ansprüche umfasst.

## Claims

1. An assembly (10) for supporting and guiding a drive shaft (1) for an aircraft turbine engine about an axis (X), comprising at least one rolling element bearing (2) intended to be mounted around said shaft (1) and a bearing support (3) comprising a cylindrical housing (30) for receiving an outer ring (21) of said bearing (2), said outer ring (21) comprising a first cylindrical portion (210) defining a rolling track for the rolling element, an annular flange (212) for fixing to said bearing support (3) and a second cylindrical portion (211) connecting the first portion (210) to the flange (212) and comprising an annular row of through openings (214) and delimiting between them columns (213) conferring flexibility on the outer ring (21), said assembly (10) comprising a device (5) for axially retaining the first portion (210) of the outer ring (21) inside the housing (30) of the bearing support (3) when the second portion (211) breaks and the first portion (210) is disengaged from the bearing support (3), said retaining device (5) comprising first claw teeth (52) disposed around the first portion (210) and configured to cooperate with complementary second claw teeth (53) inside the housing (30) of the bearing support (3),
the first claw teeth (52) having their outer peripheries (521) free which are configured to cooperate by wedge effect in a tangential direction with complementary inner surfaces (532) of the housing (30) of the bearing support (3), when the aforementioned disengagement occurs; and/or the second claw teeth (53) having their inner peripheries (531) free which are configured to cooperate by wedge effect in the tangential direction with complementary outer surfaces of the outer ring (21), when the aforementioned disengagement occurs, **characterised in that** the complementary surfaces (532) of one of the elements (3, 21) selected from the bearing support (3) and the outer ring (21) are separated by a circumferential groove (533, 523) from the claw teeth (52, 53) of that element (3, 21).

2. The assembly according to claim 1, **characterised in that** the first (52) and/or second (53) claw teeth are three to six, and each of these claw teeth (52, 53) has a circumferential extent about the axis (X) of between 60° and 180°, and **in that** the wedge effect is achieved after rotation of the first portion (210) within the housing (30) of the bearing support (3) through an angle of between 60° and 180°.

3. The assembly according to claim 1 or 2, **characterised in that** the first (52) and/or second (53) claw teeth have their free peripheries comprising a ramp (520, 530) oriented circumferentially around the axis (X).

4. The assembly of claim 3, **characterised in that** the ramp (520, 530) comprises a first circumferential end (520a, 530a) located at a circumference of diameter D1 and a second circumferential end (520b, 530b) located at a circumference of diameter D2 which is greater than D1, and **in that** the complementary surfaces (532) configured to cooperate with the claw teeth (52, 53) have a diameter D3 between the diameters D1 and D2.

5. The assembly according to any of claims 1 to 4, **characterised in that** the number of complementary surfaces of one of the elements selected from the bearing support (3) and the outer ring (21) is identical to the number of claw teeth (52, 53) of that element (3, 21), and **in that** the complementary surfaces are axially aligned with the claw teeth (52, 53) and are intended to be arranged in a plane (P) with the claw teeth (52, 53) of the other element (3, 21).

6. The assembly according to any one of claims 1 to 5, **characterised in that** a ring (36) is shrunk within the housing (30) and comprises an inner cylindrical surface surrounding an outer cylindrical surface of the first portion (210) of the ring (21) to define with this surface an annular space (6) for forming a damping oil film.

7. The assembly according to any one of claims 1 to 6, **characterised in that** the outer ring (21) is entirely housed in the bearing support (3).

8. The assembly according to claim 6, **characterised in that** the first claw teeth (52) are located between the second portion (211) and the shrink ring (36).

9. The assembly according to any of claims 1 to 8, **characterised in that** the groove (523) is located on the first portion (210) of the outer ring (21).

10. The assembly according to claim 9, **characterised in that** the groove (523) is disposed upstream of the ramp (520) of the first teeth (52) or the complementary outer surfaces of the outer ring (21).

11. The assembly according to any of claims 1 to 8, **characterised in that** the groove (533) is located on an annular recess (353) of an inner annular shell (35) of the bearing support (3).

12. The assembly according to claim 11, **characterised in that** the groove (533) is disposed downstream of second claw teeth (53) or complementary inner surfaces (532) of the bearing support (3).

13. The assembly according to any of claims 1 to 12, **characterised in that** the outer ring (21) comprises an oil film compression damper (24a) around an outer cylindrical face (23b) of the first portion (210), the damper (24a) comprises annular grooves (24b) disposed on each end of the damper (24a).

14. A turbine engine, in particular of an aircraft, comprising a supporting and guiding assembly (10) according to any of the preceding claims.
